# EUROPÄISCHE PATENTSCHRIFT

(11) **EP 1 119 398 B1**
(45) Veröffentlichungstag und Bekanntmachung des Hinweises auf die Patenterteilung: **02.04.2003**
(21) Anmeldenummer: 99957884.2
(22) Anmeldetag: 11.10.1999
(51) Int. Cl.: A63C 11/02

(54) **TRANSPORTEINRICHTUNG FÜR SKI ODER DERGLEICHEN**
TRANSPORT DEVICE FOR SKIS OR THE LIKE
DISPOSITIF POUR LE TRANSPORT DE SKIS OU DE MATERIELS COMPARABLES

(30) Priorität: 09.10.1998 DE 19846562
(43) Veröffentlichungstag der Anmeldung: 01.08.2001
(73) Patentinhaber: Bühner, Bernd, 72270 Baiersbronn (DE)
(72) Erfinder: Bühner, Bernd, 72270 Baiersbronn (DE)
(74) Vertreter: Schuster, Gregor, Dipl.-Ing.
(86) Internationale Anmeldenummer: DE9903269
(87) Internationale Veröffentlichungsnummer: WO00021622

(56) Entgegenhaltungen:
- DE-A- 2 706 330
- US-A- 3 504 921
- US-A- 4 114 915
- US-A- 4 268 050

## Beschreibung

Die Erfindung geht aus von einer Transporteinrichtung für Ski odgl. nach der Gattung des Hauptanspruchs. Derartige gattungsgemäße Transporteinrichtungen für Ski sind insbesondere als Dachträger von Personenkraftwagen bekannt oder auch von Skiträgern, die auf der Rückseite von Bussen angebracht sind, mit denen die Ski bis zum Parkplatz des Kraftfahrzeugs transportiert werden können, wonach sie allerdings nach Abnahme vom Skiträger durch eine Person zum Domizil bzw. einer unteren Liftstation getragen werden müssen. Besonders wenn Kinder mit zu einer Gruppe der Skifahrer gehört, obliegt es dem Vater oder manchmal auch der Mutter, die Ski der Kinder mitzutragen, was eine erhebliche Belastung sein kann.

Außer diesen bekannten gattungsgemäßen als Skiträger bezeichneten Transporteinrichtungen ist eine Transportvorrichtung für Skiausrüstung bekannt, bei der ein V-förmig angeordnetes Räder und Kufen aufweisendes Fahrzeug vorgesehen ist, an dem ein Paar Ski als Deichsel befestigbar ist und welches zur Aufnahme von Skistiefeln dient. Abgesehen davon, daß es meist um den Transport der Ski als der Skistiefel geht, ist die Befestigung der Ski und deren Benutzung als Deichsel mit einem Handlings-Aufwand verbunden für den der Skifahrer meistens keine Zeit hat. Außerdem ist diese Transportvorrichtung nur sehr eingeschränkt nutzbar (DE-PS 37 02 649).

*Aus der Patentschrift US 4,268,050 ist eine Transporteinrichtung für bis zu vier Paaren Ski bekannt, die auf einem handbewegbaren Wagen befestigt werden, der zu einem Dachträger für Kraftfahrzeuge umgebaut werden kann. Die Transporteinrichtung besteht aus einem doppel-tförmigen Rahmen, dessen Querbalken der Befestigung der Skipaare parallel zum senkrechten Balken des Rahmens dienen.* Eine *Anpassung der Transporteinrichtung an stark unterschiedlich lange Ski ist dabei nicht vorgesehen. Ebensowenig ist die Befestigung von Ski mit unterschiedlichen Breiten bedacht, die nicht nur bei Abfahrts- und Carvingski auftreten, sondern sich auch bei unterschiedlichen Skitypen wie Alpin- und Langlaufski zeigen.*

Die erfindungsgemäße Transporteinrichtung für Ski odgl. mit den kennzeichnenden Merkmalen des Hauptanspruchs hat demgegenüber den Vorteil, daß mehrere Paare von Ski, oder auch nur ein Paar, in sehr einfacher Weise und ohne Anstrengung von nur einer Person transportiert werden kann. Ein solcher Ski Caddy kann am Zielort ähnlich wie ein Fahrrad durch eine Kette oder ein Drahtseil mit Schloß gegen Diebstahl gesichert werden. Rad und/oder Kufe können einander so zugeordnet sein, daß bei weicherem Schnee das Rad eindringt und die Kufe zur Wirkung kommt, es kann aber auch so gestaltet sein, daß je nach Schräglage der Stützstange die Transporteinrichtung auf dem Rad gerollt wird oder auf der Kufe gezogen wird. Besonders bei Neuschnee ist es vorteilhaft, wenn die Kufe genutzt wird, um ein zu tiefes Eindringen des Rades in den Schnee zu vermeiden. Statt für Ski kann ein solcher Ski-Caddy mit wenig Umrüstungen als Golfwagen oder Anglerhilfsfahrzeug Verwendung finden. Die Bodenwand kann auch zur Aufnahme von Skistiefeln, Gummistiefeln odgl. dienen.

Nach einer vorteilhaften Ausgestaltung der Erfindung ist an der Stützstange mindestens ein Griff für den Transport vorhanden, welcher in weiterer Ausgestaltung der Erfindung in seiner Lage verschwenkbar ist. Die jeweilige Schwenklage kann durch einfache Mittel arretiert werden. für Kinder und Erwachsene und trotzdem eine einigermaßen sichere Halterung gegeben sein soll.

Nach einer diesbezüglichen weiteren Ausgestaltung der Erfindung ist die Trägerleiste über eine von Hand lösbare Klemmspannverbindung mit der Stützstange verbunden. Diese Klemmspannverbindung kann in Art einer Zwinge um die Stützstange greifen und jederzeit und sehr einfach gelöst und wieder festgespannt werden.

Nach einer weiteren vorteilhaften Ausgestaltung der Erfindung dient als Verschließeinrichtung eine beispielsweise am freien Ende der Trägerleiste mit dieser verbindbare Verschlußstange, welche über die Ski parallel zu Trägerleiste legbar und festspannbar ist. Diese Verschlußstange kann vorteilhafterweise in einem Bereich angeordnet sein, in Fahrtrichtung vor der Bindung, so daß die Ski einerseits durch die Bodenwanne und andererseits durch diese Verschließstange gegen Herausziehen oder Diebstahl gesichert sind.

Nach einer diesbezüglichen Ausgestaltung der Erfindung ist die Verschlußstange über ein Gelenk mit der Trägerleiste verbunden, so daß auf der dem Gelenk abgewandten Seite dieser Verschlußstange ein Schloß vorgesehen werden kann, um die Verschlußstange nach Aufstellung der Ski verschließen zu können.

Nach einer weiteren vorteilhaften Ausgestaltung der Erfindung besteht die Bodenwanne aus gelochtem Blech. Hierdurch wird erreicht, daß Tauwasser ohne Probleme aus der Bodenwanne entweichen kann und außerdem trotz einer das Skiende umgreifenden Gestaltung eventuell vorhandenes Tauwasser abfließen kann.

Nach einer weiteren vorteilhaften Ausgestaltung der Erfindung ist das Rad und/oder die Kufe im Bereich der Verbindung zwischen Stützstange und Bodenwanne angeordnet. Natürlich kann der Lagerpunkt auch an einer anderen Stelle vorhanden sein, nur ergibt sich an dieser Stelle eine besonders günstige Anwendung, da durch Kippen über das Rad oder die Kufe für den Transport eine günstige Lage erreicht wird. Vorteilhafterweise sind natürlich zwei Räder oder auch zwei Kufen vorhanden, um ein seitliches Wegkippen weitgehend zu vermeiden.

Nach einer speziellen Ausgestaltung der Erfindung sind die Abstandhalter zwischen Trägerleiste und Verschlußstange angeordnet. Wobei nach einer weiteren diesbezüglichen Ausgestaltung der Erfindung die Abstandhalter Polsterungen zur Stoßdämpfung aufweisen können. Besonders bei der Verwendung als Autoskiträger kann es wichtig sein, daß die Ski in ihrer Halterung nicht rattern.

Nach einer weiteren vorteilhaften Ausgestaltung der Erfindung weist die Kufe etwa die Breite der Bodenwanne auf und kann nach weiterer Ausgestaltung der Erfindung schwenkbar gelagert sein, wobei der Schwenkpunkt vorteilhafterweise in der Drehachse des Rades liegen kann. Hierdurch stellt sich die Kufenunterseite stets auf den Boden ein, auf dem sie gleitet, mit dem Vorteil einer günstigen Lastübertragung auf den Boden.

Nach einer weiteren vorteilhaften Ausgestaltung der Erfindung weist die Bodenwanne ein Raster auf, zur Trennung der zu transportierenden Ski, so daß diese mit ihren in die Wanne ragenden Enden dadurch eine Verrutschsicherung haben. Erfindungsgemäß kann nach weiteren Ausgestaltungen der Erfindung sowohl die Wanne als auch die Träerleiste einen Transport von mindestens je zwei Skipaaren nebeneinander und hintereinander ermöglichen. Abgesehen von der Gestaltung der Wanne und dessen Raster kann dieses durch zwei Trägerleisten erfolgen, die übereinander angeordnet sind und Abstandhalter aufweisen, die je Trägerleiste in entgegengesetzte Richtungen weisen. Natürlich ist es auch möglich an einer Trägerleiste einander abweichende Abstandhalter anzuordnen.

Eine weitere vorteilhafte Ausgestaltung der Erfindung ist gekennzeichnet durch deren Verwendung als Skiständer für ein Kraftfahrzeug, bei dem insbesondere die Trägerleiste und die Bodenwanne die Fahrzeugbreite überqueren und am Fahrzeugdachrand befestigt werden können.

Nach einer weiteren vorteilhaften Ausgestaltung der Erfindung wirkt die Transporteinrichtung mit einem Geldautomaten zusammen, so daß sie als Leihgerät einsetzbar ist bzw. im Rahmen einer Diebstahlsicherung bei der der Geldautomat ortsgebunden ist, beispielsweise beim Abstellen der Ski einschließlich Transporsicherung bei einem Hotel odgl.

Nach einer weiteren vorteilhaften Ausgestaltung der Erfindung ist die Trägerleiste für Ski austauschbar gegen eine Trägerleiste für Golfschläger, Angelruten odgl. Hierdurch wird der Hauptteil der Transporteinrichtung, nämlich das Trägersystem mit Stützstange und Bodenwanne beibehalten, während nur die der Applikation dienenden Teile wie Trägerleiste oder Verschlußeinrichtung ausgetauscht werden.

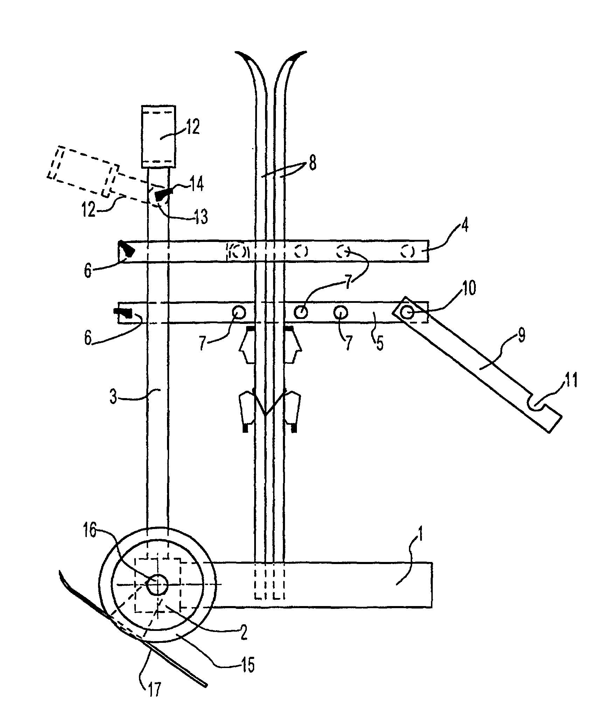

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstandes der Erfindung ist vereinfacht und in der Seitenansicht in der Zeichnung dargestellt und im folgenden näher beschrieben.

Wie in der Zeichnung dargestellt ist an der einen Längsseite einer Bodenwanne 1 über ein Verbindungsstück 2 etwa rechtwinklig eine Stützstange 3 befestigt, an der in etwa parallel zur Bodenwanne 1 zwei Trägerleisten 4 und 5 befestigt sind. Wie nicht näher dargestellt werden diese Trägerleisten 4 und 5 über zwingenartige Verschraubungen 6 so an der Stützstange 3 festgeklemmt, daß bei von Hand möglichem Lockern dieser Verschraubungen 6 die Trägerleisten 4 und 5 parallel zueinander verstellbar sind. Hierdurch kann auf unterschiedliche Längen von Ski Rücksicht genommen werden. Auf den Trägerleisten sind Abstandhalter 7 angeordnet, zwischen denen Ski 8 eingesetzt werden können, um so ein seitliches Arretieren derselben zu bewirken. Zur Festbindung der Ski 8 an der Trägerleiste 5 dient eine Verschlußstange 9, die am freien Ende der Trägerleiste 5 über ein Schwenklager 10 schwenkbar angebunden ist und die mit einer Ausnehmung 11 über einen entsprechend ausgestalteten Abstandhalter 7 schwenkbar. und durch nicht mehr dargestellte Mittel dort befestigbar ist.

An der Stützstange 3 ist am oberen Ende ein Griff 12 vorgesehen, welcher um ein Schwenklager 13 in eine für den Nutzer günstige Lage geschwenkt und danach über eine Schraubverbindung 14 in dieser Lage arretiert werden kann. Im Bereich des Verbindungsstücks 2 sind zwei Räder 15, von denen nur eines dargestellt ist, auf einer Achse 16 gelagert, um die ebenfalls verschwenkbar eine Kufe 17 gelagert ist. Je nach Straßensituation greift für den Transport entweder das Rad 15, nämlich bei einer harten Fahrbahn oder die Kufe 17, deren Abstand zur Achse 16 geringer ist als der Durchmesser des Rades 15.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Bodenwanne
- 2: Verbindungsstück
- 3: Stützstange
- 4: Trägerleisten
- 5: Trägerleisten
- 6: Verschraubungen
- 7: Abstandhalter
- 8: Ski
- 9: Verschlußstange
- 10: Schwenklager
- 11: Ausnehmung
- 12: Griff
- 13: Schwenklager
- 14: Schraubverbindung
- 15: Rad
- 16: Achse
- 17: Kufe

## Patentansprüche

1. Transporteinrichtung für Ski odgl.,
- mit mindestens einer an einem Trägersystem (3) befestigten Trägerleiste (4, 5) zur Auflage und Halterung der zu transportierenden Ski (8) odgl.,
- *mit einer weitgehend parallel zu der Trägerleiste (4, 5) verlaufenden Halterung (1) odgl. zum Aufstellen der Ski (8), die an einer weitgehend rechtwinklig zu ihrer Längsausdehnung verlaufende Stützstange (3) befestigt ist, an welcher auch die Trägerleiste (4, 5) befestigt ist,*
- mit an der Trägerleiste (4, 5) mit Abstand angeordneten Abstandhaltern (7) um mehrere Ski (8) odgl. bzw. Skipaare odgl. nebeneinander anzuordnen,
- mit einer Verschlußeinrichtung (9) zur Einbindung der Ski (8) an der Trägerleiste (4) und
- *mit mindestens einem Rad (15) und*/*oder einer Kufe (17) für den Transport auf festem Untergrund oder auf weichem Untergrund wie Schnee, das bzw. die zumindest mittelbar an Stützstange (3) oder Halterung (1) angeordnet ist,*
**dadurch gekennzeichnet**,
- *daß zumindest die Trägerleiste (5) über eine von Hand lösbare Klemmspannverbindung (6) mit der Stützstange (3) verbindbar ist.*

2. Transporteinrichtung nach Anspruch 1, **dadurch gekennzeichnet, daß** an der Stützstange (3) mindestens ein Griff (12) für den Transport vorhanden ist.

3. Transporteinrichtung nach Anspruch 2, **dadurch gekennzeichnet, daß** der Griff (12) in seiner Lage zur Stützstange (3) verstellbar, insbesondere verschwenkbar ist.

4. Transporteinrichtung nach einem der Ansprüche 1 bis 3, **dadurch gekennzeichnet, daß** mehrere Trägerleisen (4, 5) vorhanden sind und daß diese Trägerleisten (4, 5) parallel zueinander an der Stützstange (3) befestigt sind.

5. Transporteinrichtung nach einem der vorhergehenden Ansprüche, **dadurch gekennzeichnet, daß** als Verschlußeinrichtung eine mit der Trägerleiste (5) verbindbare Verschlußstange (9) dient.

6. Transporteinrichtung nach Anspruch 6, dadurch gekennzeichent, daß die Verschlußstange (9) über ein Gelenk (10) mit der Trägerleiste (5) verbunden ist.

7. Transporteinrichtung nach Anspruch 6 oder 7, **dadurch gekennzeichnet, daß** die Abstandhalter (7) zwischen Trägerleiste (5) und Verschlußstange (9) angeordnet sind.

8. Transporteinrichtung nach Anspruch 8, **dadurch gekennzeichnet, daß** die Abstandhalter (7) Polsterungen zur Stoßdämpfung aufweisen.

9. *Transporteinrichtung nach einem der vorhergehenden Ansprüche, dadurch gekennzeichent, daß die Halterung (1) wannenförmig ausgebildet ist*

10. Transporteinrichtung nach einem der vorhergehenden Ansprüche, **dadurch gekennzeichnet, daß** die *Halterung* (1) aus gelochtem Blech besteht.

11. Transporteinrichtung nach einem der vorhergehenden Ansprüche, **dadurch gekennzeichnet, daß** Rad (15) und/oder Kufe (17) im Bereich der Verbindung zwei zwischen Stützstange (3) und *Halterung* (1) angeordnet ist.

12. Transporteinrichtung nach einem der vorhergehenden Ansprüche, **dadurch gekennzeichnet, daß** die Kufe (17) etwa die Breite der *Halterung* (1) aufweist.

13. Transporteinrichtung nach einem der vorhergehenden Ansprüche, **dadurch gekennzeichnet, daß** die Kufe (17) schwenkbar gelagert ist.

14. Transporteinrichtung nach Anspruch 13, **dadurch gekennzeichnet, daß** der Schwenkpunkt der Kufe (17) in der Drehachse des Rades (15) liegt.

15. Transporteinrichtung nach einem der vorhergehenden Ansprüche, **dadurch gekennzeichnet, daß** die *Halterung* (1) ein Raster aufweist zur Trennung der zu transportierenden Ski.

16. Transporteinrichtung nach einem der vorhergehenden Ansprüche, **dadurch gekennzeichnet, daß** die *Halterung* (1) und Trägerleiste (5) einen Transport von mindestens je zwei Skipaaren (8) nebeneinander und hintereinander ermöglicht.

17. Transporteinrichtung nach einem der vorhergehenden Ansprüche, **gekennzeichnet durch** deren Verwendung als Skiständer.

18. Transporteinrichtung nach einem der vorhergehenden Ansprüche, **dadurch gekennzeichnet, daß** sie mit einem Geldautomaten zusammenwirkt als Leihgerät bzw. als Diebstahlsicherung.

19. Transporteinrichtung nach einem der vorhergehenden Ansprüche, **dadurch gekennzeichnet, daß** die Trägerleiste für Ski austauschbar ist gegen eine Trägerleiste für Golfschläger, Angelruten odgl.

## Claims

1. Transport device for skis or the like,
- with at least one carrier rail (4, 5) secured to a carrier system (3) for the support and mounting of the skis (8) or the like to be transported,
- *with a mounting (1) or the like running largely parallel to the carrier rail (4, 5) for the accommodation of the skis (8) which is secured to a supporting rod (3) running largely at right angles to its longitudinal elongation and to which the carrier rail (4, 5) is also secured,*
- with distance pieces arranged at a distance from each other on the carrier rail (4, 5) so that several skis (8) or the like or pairs of skis or the like can be arranged adjacent to one another,
- with a locking mechanism (9) for fixing the skis (8) to the carrier rail (4), and
- *with at least one wheel (15) and*/*or one runner (17) for transport on firm ground or on soft ground such as snow which is arranged at least indirectly on the supporting rod (3) or mounting (1),*
**characterised in that**
- *at least the carrier rail (5) can be connected to the supporting rod (3) by means of a clamping mechanism (6) that can be released by hand.*

2. Transport device according to claim 1, **characterised in that** at least one handle (12) for transport is present on the supporting rod (3).

3. Transport device according to claim 2, **characterised in that** the handle (12) is adjustable in its position relative to the supporting rod (3), and in particular can be swung horizontally.

4. Transport device according to one of claims 1 to 3, **characterised in that** several carrier rails (4, 5) are present and that these carrier rails (4, 5) are secured in parallel to one another on the supporting rod (3).

5. Transport device according to one of the previous claims, **characterised in that** a locking rod (9) which can be connected to the carrier rail (5) serves as a locking mechanism.

6. Transport device according to claim 6, **characterised in that** the locking rod (9) is connected to the carrier rail (5) by means of a joint (10).

7. Transport device according to claim 6 or 7, **characterised in that** the distance pieces (7) are arranged between the carrier rail (5) and the locking rod (9).

8. Transport device according to claim 8, **characterised in that** the distance pieces (7) have padding to absorb shocks.

9. *Transport device according to one of the previous claims, **characterised in that** the mounting (1) is developed in the shape of a trough.*

10. Transport device according to one of the previous claims, **characterised in that** the *mounting (1)* consists of perforated sheet metal.

11. Transport device according to one of the previous claims, **characterised in that** the wheel (15) and/or runner (17) is arranged in the area of join two, between the supporting rod (3) and the *mounting (1).*

12. Transport device according to one of the previous claims, **characterised in that** the runner (17) has approximately the same width as the *mounting (1).*

13. Transport device according to one of the previous claims, **characterised in that** the runner (17) is pivoted.

14. Transport device according to claim 13, **characterised in that** the pivoting point of the runner (17) lies in the axis of rotation of the wheel (15).

15. Transport device according to one of the previous claims, **characterised in that** the *mounting (1)* has a grid for separation of the skis to be transported.

16. Transport device according to one of the previous claims, **characterised in that** the *mounting (1)* and carrier rail (5) enable the transportation of at least two pairs of skis (8) each, adjacent to and behind one other.

17. Transport device according to one of the previous claims, **characterised in** their use as ski stands.

18. Transport device according to one of the previous claims, **characterised in that** it interacts with an automat to serve as a hiring device or as a protection against theft.

19. Transport device according to one of the previous claims, **characterised in that** the carrier rail for skis can be exchanged for a carrier rail for golf clubs, fishing rods or the like.

## Revendications

1. Dispositif de transport pour des skis ou similaires,
- avec au moins une barre porteuse (4, 5) fixée sur un système porteur (3) pour le support et la fixation des skis (8) à transporter ou similaires ;
- *avec une fixation (1) largement parallèle à la barre porteuse (4, 5) ou similaire pour l'installation des skis (8), qui est fixée sur une barre de soutien (3) disposée largement à angle droit par rapport à son extension longitudinale, sur laquelle est fixée également la barre porteuse (4, 5) ;*
- avec des écarteurs (7) disposés à distance sur la barre porteuse (4, 5) afin de disposer plusieurs skis (8) ou similaires ou des paires de skis ou similaires les un(e)s à côté des autres ;
- avec un dispositif de fermeture (9) pour l'arrimage des skis (8) sur la barre de support (4) et
- *avec au moins une roue (15) et*/*ou un patin (17) pour le transport sur un sol dur ou sur un sol souple comme de la neige, qui est disposé(e) au moins indirectement sur la barre d'appui (3) ou la fixation (1),*
**caractérisé en ce que**
- *au moins la barre porteuse (5) peut être reliée à la barre de soutien (3) par un dispositif de serrage par blocage (6) qui peut être desserré à la main*.

2. Dispositif de transport selon la revendication 1, **caractérisé en ce qu'**au moins une poignée (12) pour le transport est présente sur la barre de soutien (3).

3. Dispositif de transport selon la revendication 2, **caractérisé en ce que** la poignée (12) est réglable, notamment basculable, dans sa position par rapport à la barre de soutien (3).

4. Dispositif de transport selon l'une quelconque des revendications 1 à 3, **caractérisé en ce que** plusieurs barres porteuses (4, 5) sont présentes et **en ce que** ces barres porteuses (4, 5) sont fixées de façon parallèle entre elles sur la barre de soutien (3).

5. Dispositif de transport selon l'une quelconque des revendications précédentes, **caractérisé en ce qu'**une tige de fermeture (9) pouvant être reliée à la barre porteuse (5) sert de dispositif de fermeture.

6. Dispositif de transport selon la revendication 6, **caractérisé en ce que** la tige de fermeture (9) est reliée par une articulation (10) à la barre porteuse (5).

7. Dispositif de transport selon la revendication 6 ou 7, **caractérisé en ce que** les écarteurs (7) sont disposés entre la barre porteuse (5) et la tige de fermeture (9).

8. Dispositif de transport selon la revendication 8, **caractérisé en ce que** les écarteurs (7) présentent des rembourrages pour l'amortissement des chocs.

9. *Dispositif de transport selon Tune quelconque des revendications précédentes, **caractérisé en ce que** la fixation (1) est conçue en forme de cuve.*

10. Dispositif de transport selon l'une quelconque des revendications précédentes, **caractérisé en ce que** la *fixation* (1) est faite de tôle perforée.

11. Dispositif de transport selon l'une quelconque des revendications précédentes, **caractérisé en ce que** la roue (15) et/ou le patin (17) est disposé(e) dans la zone de la liaison deux entre la barre de soutien (3) et la *fixation* (1).

12. Dispositif de transport selon l'une quelconque des revendications précédentes, **caractérisé en ce que** la largeur du patin (17) correspond à peu près à celle de la *fixation* (1).

13. Dispositif de transport selon l'une quelconque des revendications précédentes, **caractérisé en ce que** le patin (17) est logé de façon pivotante.

14. Dispositif de transport selon la revendication 13, **caractérisé en ce que** le point de pivotement du patin (17) se situe dans l'axe de rotation de la roue (15).

15. Dispositif de transport selon l'une quelconque des revendications précédentes, **caractérisé en ce que** la *fixation* (1) présente un cadre pour la séparation des skis à transporter.

16. Dispositif de transport selon l'une quelconque des revendications précédentes, **caractérisé en ce que** la *fixation* (1) et la barre porteuse (5) permettent le transport d'au moins respectivement deux paires de skis les unes derrière les autres et les unes à côté des autres.

17. Dispositif de transport selon l'une quelconque des revendications précédentes, **caractérisé par** son utilisation comme porte-skis.

18. Dispositif de transport selon l'une quelconque des revendications précédentes, **caractérisé en ce qu'**il agit, conjointement avec un appareil à pièces, comme appareil de location ou comme sécurité antivol.

19. Dispositif de transport selon l'une quelconque des revendications précédentes, **caractérisé en ce que** la barre porteuse pour les skis peut être remplacée par une barre porteuse pour des clubs, des cannes à pêche ou similaires.
